# EUROPÄISCHE PATENTSCHRIFT

(11) **EP 2 190 091 B1**
(45) Veröffentlichungstag und Bekanntmachung des Hinweises auf die Patenterteilung: **11.05.2011**
(21) Anmeldenummer: 09012840.6
(22) Anmeldetag: 10.10.2009
(51) Int. Cl.: H02G 3/18

(54) **Träger**
Holder
Support

(30) Priorität: 19.11.2008 DE 102008057918
(43) Veröffentlichungstag der Anmeldung: 26.05.2010
(73) Patentinhaber: Berker GmbH & Co. KG, 58579 Schalksmühle (DE)
(72) Erfinder: Bröcher, Egon, 57482 Wenden (DE); Eich, Wolfgang, 57482 Wenden (DE)

(56) Entgegenhaltungen:
- EP-A- 1 936 765
- DE-U1- 9 004 946
- US-A- 3 403 215

## Beschreibung

Die Erfindung betrifft einen Träger gemäß Oberbegriff des Hauptanspruches.

Elektrische Installationsgeräte, wie z. B. Schutzkontaktsteckdosen, Schalter, Taster, Bewegungsmelder, Orientierungslichter, Tastsensoren usw. sind üblicherweise mit einem Träger versehen damit eine sichere und positionsgerechte Installation gewährleistet ist. Oftmals sind solche Träger als Tragringe oder Tragplatten ausgeführt und aus Metall hergestellt. Über den Träger werden die elektrischen Installationsgeräte z. B. an Aufputz- oder Unterputzinstallationsdosen, Kabelkanälen usw. befestigt, wobei auch als Schrauben ausgeführte Befestigungselemente Verwendung finden. Üblich ist auch eine direkte Befestigung der Träger mittels Schrauben an sogenannten Unterkonstruktionen, wie z. B. Panellen, Gipskarton, Wandputz und dergleichen.

Durch die US 3 403 215 A ist ein dem Oberbegriff des Hauptanspruches entsprechend ausgebildeter Träger bekannt geworden. Bei diesem Träger für elektrische Installationsgeräte sind zwei zum Durchtritt jeweils eines Befestigungselementes vorgesehene Befestigungslöcher vorhanden, wobei an den Kantenbereiche zumindest eines Befestigungsloches ein in den Durchtrittsbereich hineinragendes Haltemittel angeformt ist.

Des weiteren sind durch die DE 10 2004 033 462 B3 und die DE 10 2006 060 231 A1 jeweils Träger bekannt geworden, welche zur sicheren und positionsgerechten Installation von elektrischen Installationsgeräten mehrere Befestigungslöcher aufweisen. Werden die Träger z. B. mittels als Schrauben ausgebildeten Befestigungselementen an einer Unterputzinstallationsdose oder aber direkt an einer Unterkonstruktion befestigt, ergibt sich oft das Problem, das trotz der Verwendung von Senkkopfschrauben diese über die obere Hauptebene des Trägers hervorstehen. Insbesondere bei modernen Installationsgeräten der Gebäudesystemtechnik kann ein Überstehen der Befestigungsschrauben bzw. der Befestigungselemente dazu führen, dass die Installationsgeräte unschön von der Wand abstehen oder aber eine installationsgerechte Montage dieser Installationsgeräte nicht möglich ist.

Zudem ist durch die DE 90 04 946 U1 ein Träger für Schaltereinsätze oder Einsätze beliebiger Art bekannt geworden, welcher mittels verschwenkbarer Krallen in einer Eingipsdose zu befestigen ist, wobei die Krallen mittels Schrauben verschwenkbar sind und wobei in dem Einsatz für jede Schraube ein Teil mit Federscheiben vorgesehen ist, die schräg in Richtung auf das Wandinnere auf die Schraube zulaufen und mit ihren Stirnseiten in Gewindegänge der Schrauben greifen.

Der vorliegenden Erfindung liegt daher die Aufgabe zugrunde, einen Träger für elektrische Installationsgeräte zu schaffen, bei dem auf einfache Art und Weise die Möglichkeit besteht, den Kopfbereich der zur Befestigung verwendeten Befestigungselemente zumindest bündig mit der oberen Hauptfläche des Trägers abschließen zu lassen.

Die vorliegende Aufgabe wird durch die im Hauptanspruch angegebenen Merkmale gelöst.

Bei einem solchermaßen ausgebildeten Träger für elektrische Installationsgeräte ist besonders vorteilhaft, dass sich die in den Durchtrittsbereich der Befestigungslöcher hineinragenden Haltemittel während des Herstellungsprozesses des Trägers quasi ohne zusätzlichen Aufwand auf kostengünstige Art und Weise mit anformen lassen und während des Befestigungsvorganges einen an das verwendete Befestigungsmittel angepassten, aus der oberen Hauptfläche des Trägers abgesenkten Aufnahmebereich ausbilden.

Weitere vorteilhafte Ausgestaltungen des erfindungsgemäßen Gegenstandes sind in den Unteransprüchen angegeben. Anhand eines in den Zeichnungen dargestellten Ausführungsbeispieles sei die Erfindung im Prinzip näher erläutert, dabei zeigen:
- Fig. 1:: prinziphaft einen an einer Panellwand befestigten Träger in der Draufsicht;
- Fig. 2:: prinziphaft das Detail A gemäß Figur 1 in vergrößerter Darstellung;
- Fig. 3:: prinziphaft das Detail A gemäß Figur 1 in vergrößerter Darstellung ohne Befestigungselement;
- Fig. 4:: prinziphaft einen Schnitt entsprechend Linie B-B, gemäß Figur 2, wobei die als Befestigungselement verwendete Senkkopfschraube bereits in ihre optimale Einschraubposition gebracht wurde.

Wie aus den Figuren hervorgeht, weist ein solcher Träger 1 zur sicheren und positionsgerechten Installation von elektrischen Installationsgeräten, wie Schutzkontaktsteckdosen, Schaltern, Tastern, Bewegungsmeldern und dergleichen, mehrere zum Durchtritt von Befestigungselementen 2 vorgesehene erste Befestigungslöcher 3 und zweite Befestigungslöcher 4 auf. Ein solchermaßen ausgebildeter Träger 1 eröffnet also mehrere in ihrer Art unterschiedliche Befestigungsmöglichkeiten.

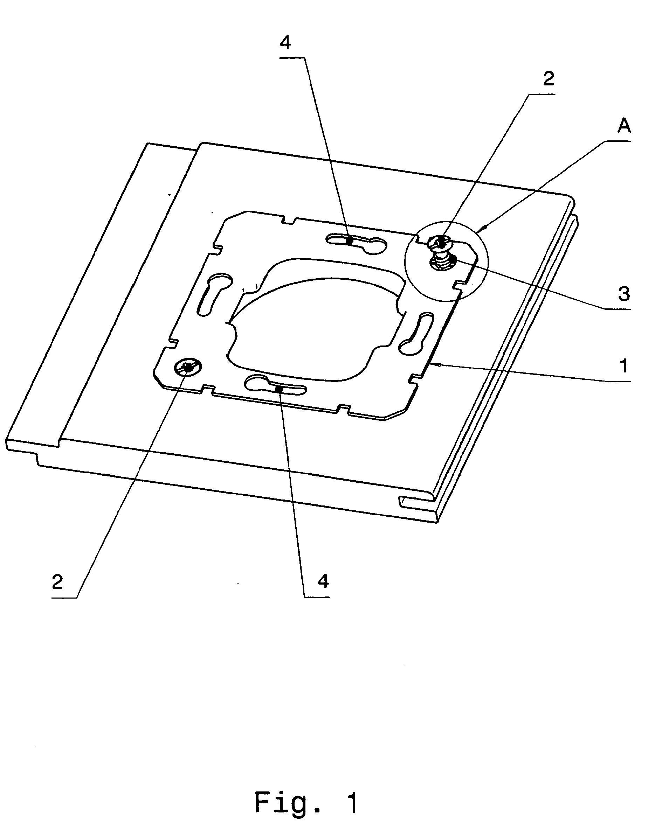

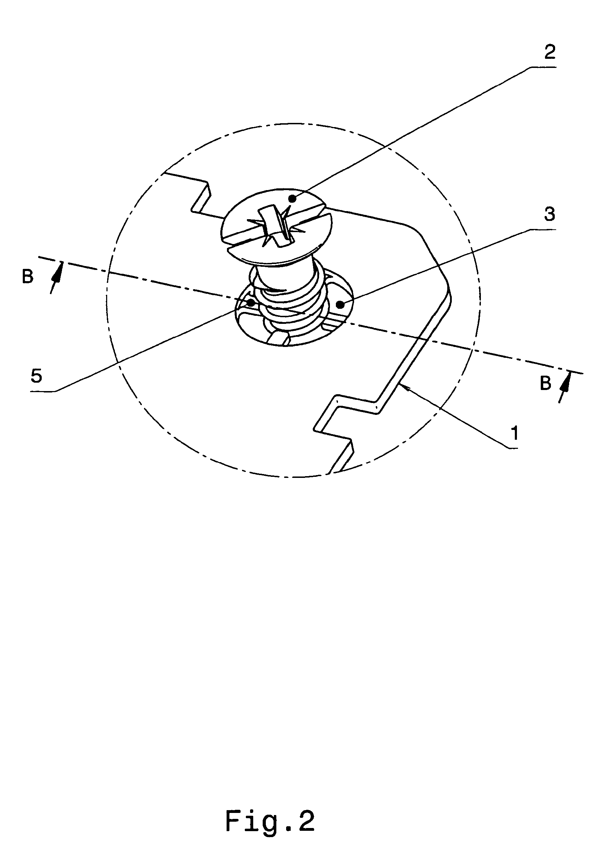

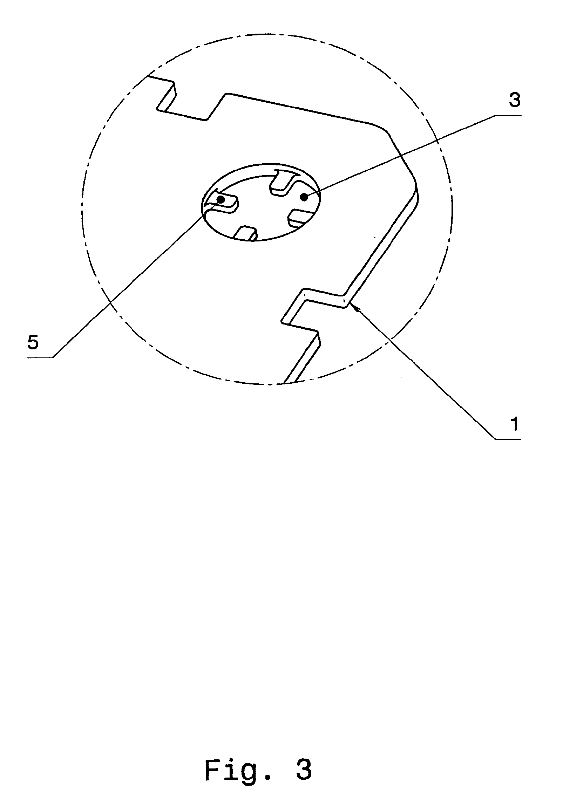

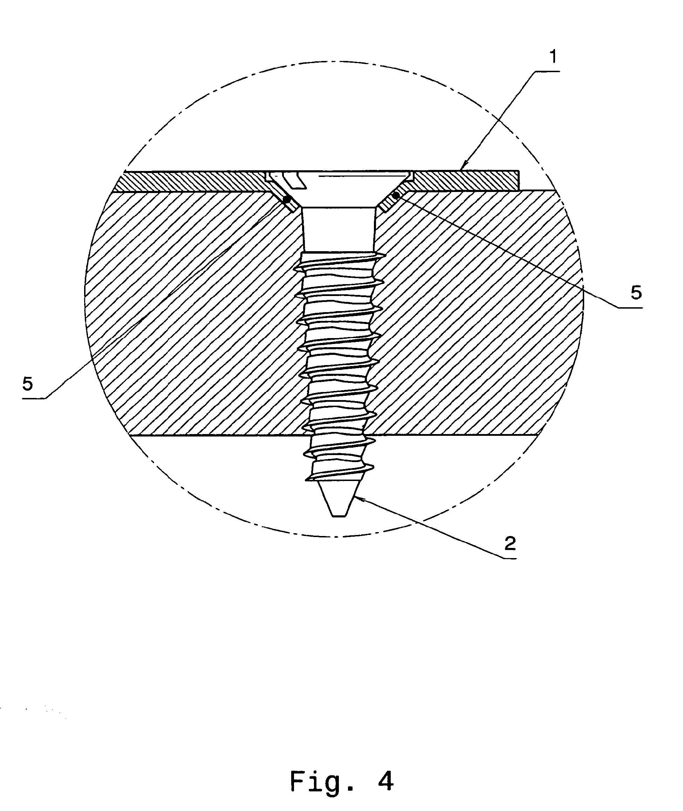

Wie des weiteren insbesondere aus Figur 1 hervorgeht, sind im Träger 1 zur Realisierung verschiedener Befestigungsmöglichkeiten zwei kreisförmig ausgebildete erste Befestigungslöcher 3 und, wie üblich, vier langlochartig ausgeführte zweite Befestigungslöcher 4 vorhanden. Die beiden ersten Befestigungslöcher 3 sind zwei diagonal gegenüberliegenden Eckbereichen des Trägers 1 zugeordnet. Wie des weiteren insbesondere aus den Figuren 2, 3 und 4 hervorgeht, sind an die Kantenbereiche der beiden ersten Befestigungslöcher 3 jeweils vier in den Durchtrittsbereich hineinragende Haltemittel 5 angeformt. Die Haltemittel 5 sind jeweils zungenartig ausgebildet und in ihrer Wandstärke etwa halb so dick ausgeführt wie die Wandstärke des Trägers 1. Um dies zu erreichen, wurden die Haltemittel 5 bei der Herstellung des Trägers 1 durch einen Prägevorgang etwa auf die halbe Wandstärke heruntergeprägt. Der Träger 1 selbst wird durch einen Stanzprozess hergestellt. Das Stanzen des Trägers 1 und das Prägen der Haltemittel 5 können Vorteilhafterweise in einem einzigen Arbeitsschritt durchgeführt werden. So ergibt sich zum einen eine gute Zentrierung für die als Schrauben ausgeführten Befestigungsmittel 2 und zum anderen eine leichtere Verformbarkeit der zungenartig ausgeführten Haltemittel 5. Die leichtere Verformbarkeit der Haltemittel 5 ist vorteilhaft, damit diese sich zum Ende des Schraubvorganges dem Kopf des Befestigungsmittels 2 bzw. der Schraube gut anpassen und gegebenenfalls in die Wandung der Unterkonstruktion, welche z. B. aus Putz, Panellen, Gipskarton usw. besteht, hineingebogen werden können. Beim Schraubvorgang bzw. Befestigungsvorgang wird also automatisch ein an den Kopf des verwendeten Befestigungsmittels 2 angepasster, aus der oberen Hauptfläche des Trägers 1 abgesenkter Aufnahmebereich ausgebildet. Bei einem, wie im Ausführungsbeispiel als Senkkopfschraube ausgeführten Befestigungsmittel 2 wird die Senkkopfschraube zunächst in das erste Befestigungsloch 3 eingeführt, wobei die zungenartig ausgeführten Haltemittel 5 zunächst die Zentrierung der Senkkopfschraube übernehmen. Zur Befestigung des elektrischen Installationsgerätes wird die Senkkopfschraube direkt in die Unterkonstruktion, welche z. B aus einer Panelle besteht, eingeschraubt. Nach dem die Senkkopfschraube größtenteils in die Unterkonstruktion eingeschraubt worden ist, kommt diese mit der Unterseite ihres Schraubkopfes an den vier Haltemitteln 5 des ersten Befestigungsloches 3 zur Anlage. Wird dann der Schraubprozess fortgeführt, verformt die Senkkopfschraube, wie insbesondere aus Figur 3 hervorgeht, die Haltemittel 5 derart, so dass diese durch Verbiegen in die Unterkonstruktion eindringen und automatisch ein angepasster Aufnahmebereich für den Kopf des Befestigungsmittels 2 ausgebildet wird. Die optimale Einschraubtiefe ist dann erreicht, wenn die Oberseite des Kopfes der Senkkopfschraube zumindest bündig mit der Oberseite der Hauptfläche des Trägers 1 abschließt bzw. etwas unterhalb dieser Oberseite im Träger 1 bzw. Aufnahmebereich zu liegen kommt. Auf einfache Art und Weise, lediglich hervorgerufen durch den Schraubprozess ist somit eine Aufnahme bzw. Halterung des Befestigungsmittels 2 bzw. der Senkkopfschraube realisiert, die dazu führt, dass der Kopf nicht über die Oberseite der Hauptfläche des Trägers 1 hervorsteht. Der erfindungsgemäße Gedanke ist nicht auf die Verwendung von als Schrauben bzw. Senkkopfschrauben ausgeführten Befestigungsmitteln 2 begrenzt. Im Rahmen der Erfindung ist es alternativ oder zusätzlich auch möglich zumindest eines der langlochartig ausgeführten zweiten Befestigungslöcher 4 mit derartigen Haltemitteln 5 zu versehen.

Gegebenenfalls kann der Schaft des Befestigungsmittels 2 bzw. der Senkkopfschraube derart ausgebildet sein, so dass dieser während des Befestigungsvorganges bzw. Schraubprozesses bereits eine Vorverformung der Haltemittel 5 vornimmt.

## Patentansprüche

1. Träger zur sicheren und positionsgerechten Installation von elektrischen Installationsgeräten, wie Schutzkontaktsteckdosen, Schaltern, Tastern, Bewegungsmeldern und dergleichen, wobei im Träger zum Durchtritt eines Befestigungselementes zumindest ein Befestigungsloch vorhanden ist, wobei das Befestigungsloch ein an seinen Kantenbereich angeformtes und in seinen Durchtrittsbereich hineinragendes Haltemittel aufweist, **dadurch gekennzeichnet, dass** zumindest drei Haltemittel (5) an den Kantenbereich eines einzigen Befestigungsloches (3, 4) angeformt sind, und dass die Wandstärke der Haltemittel (5) dünner als die Wandstärke des Trägers (1) ausgeführt ist.

2. Träger nach Anspruch 1, **dadurch gekennzeichnet, dass** zumindest ein Haltemittel (5) zungenartig ausgebildet ist.

3. Träger nach einem der Ansprüche 1 oder 2, **dadurch gekennzeichnet, dass** zumindest ein Haltemittel (5) sichelartig ausgebildet ist.

4. Träger nach einem der Ansprüche 1 bis 3, **dadurch gekennzeichnet, dass** zumindest ein erstes Befestigungsloch (3) kreisförmig ausgeführt ist,

5. Träger nach einem der Ansprüche 1 bis 4, **dadurch gekennzeichnet, dass** zumindest ein zweites Befestigungsloch (4) langlochartig ausgeführt ist.

6. Träger nach einem der Ansprüche 1 bis 5, **dadurch gekennzeichnet, dass** zumindest zwei Befestigungslöcher (3, 4) im Träger (1) vorhanden sind.

## Claims

1. Support for ensuring the reliable and correctly positioned mounting of electrical installation devices such as socket outlets with earthing contact, switches, pushbuttons, motion detectors and the like, at least one mounting hole being provided in the support for the purpose of a fastening element penetrating through it, the mounting hole having a means of retention moulded onto its edge zone and protruding into its penetration area, **characterised in that** at least three retention means (5) are moulded onto the edge zone of a single mounting hole (3, 4) and that the wall thickness of the retention means (5) is of a thinner design than the wall thickness of the support (1).

2. Support according to Claim 1, **characterised in that** at least one retention means (5) is of a tongue-like design.

3. Support according to either Claim 1 or Claim 2, **characterised in that** at least one retention means (5) is of a sickle-like design.

4. Support according to any of Claims 1 to 3, **characterised in that** at least a first mounting hole (3) is of a circular design.

5. Support according to any of Claims 1 to 4, **characterised in that** at least one second mounting hole (4) is of a slot-like design.

6. Support according to any of Claims 1 to 5, **characterised in that** at least two mounting holes (3, 4) are provided in the support (1).

## Revendications

1. Support pour l'installation sûre et adaptée au positionnement d'appareils d'installation électriques tels que prises de courant avec contact de mise à la terre, commutateurs, touches, détecteurs de mouvement et appareils semblables, le support présentant au moins un orifice de fixation permettant de faire passer un élément de fixation, l'orifice de fixation présentant au niveau de son bord un dispositif de maintien moulé et dépassant dans la zone de traversée, **caractérisé en ce que** au moins trois dispositifs de maintien (5) sont moulés au niveau du bord d'un seul orifice de fixation (3, 4) et **en ce que** l'épaisseur de paroi des dispositifs de maintien (5) est inférieure à l'épaisseur de paroi du support (1).

2. Support selon la revendication 1, **caractérisé en ce que** au moins un dispositif de maintien (5) a la forme d'une languette.

3. Support selon l'une des revendications 1 ou 2, **caractérisé en ce que** au moins un dispositif de maintien (5) a la forme d'une faux.

4. Support selon l'une des revendications 1 à 3, **caractérisé en ce que** au moins un premier orifice de fixation (3) est circulaire,

5. Support selon l'une des revendications 1 à 4, **caractérisé en ce que** au moins un second orifice de fixation (4) est oblong.

6. Support selon l'une des revendications 1 à 5, **caractérisé en ce que** au moins deux orifices de fixation (3, 4) existent sur le support (1).
